# EUROPEAN PATENT SPECIFICATION

(11) **EP 1 182 054 B1**
(45) Date of publication and mention of the grant of the patent: **13.05.2009**
(21) Application number: 01121968.0
(22) Date of filing: 14.11.1996
(51) Int. Cl.: B42D 15/10, G06K 19/16, G02B 5/18, G03H 1/02

(54) **Optical information carrier**
Optischer Informationsträger
Porteur d'informations optiques

(30) Priority: 28.11.1995 CH 336995; 18.12.1995 CH 356795
(43) Date of publication of application: 27.02.2002
(62) Divisional of application: 96939036.8
(73) Proprietor: OVD Kinegram AG, 6301 Zug (CH)
(72) Inventor: Tompkin, Wayne Robert, 5400 Baden (CH); Staub, René, 6332 Hagendorn (CH)
(74) Representative: LOUIS, PÖHLAU, LOHRENTZ

(56) References cited:
- EP-A- 0 012 375
- EP-A- 0 057 271
- EP-A- 0 170 832
- EP-A- 0 328 086
- EP-A- 0 420 261
- WO-A-91/06925
- WO-A-94/27254
- DE-A- 2 350 109
- GB-A- 2 237 774
- US-A- 3 552 853
- US-A- 5 267 755

## Description

The invention concerns an optical information carrier.

Such optical information carriers with an optical diffraction structure are suitable for example for increasing the level of safeguard against forgery and for conspicuously identifying articles of all kinds and can be used in particular in relation to security and bond documents, passes, payment means and similar articles to be safeguarded.

European patent specification EP 328 086 discloses an optical information carrier in which a first hologram is stored in a layer which is metallised over its entire surface, and a second hologram is stored in a partially metallised layer which is disposed thereover. The two holograms are arranged at a small spacing and are visible at different viewing angles. There is no correlation of any kind between the two holograms. An optical information carrier of that kind can be copied with conventional holographic methods.

European patent specification EP 012 375 discloses an optical information carrier in which three grating layers with three colour component images are arranged in mutually directly superimposed relationship. The production of that information carrier is expensive as the three grating layers must be arranged accurately so as to afford an image which is satisfactory from the colour point of view.

British patent specification GB 2 237 774 discloses production processes for holograms, in which two individual holograms are glued together or in which a print layer is applied directly over the hologram. Specific optical effects which could arise out of the interplay of the two holograms or the hologram and the print layer are not discussed.

German laid-open application (DE-OS) No. 23 50 109 discloses a foil serving as a holographic recording medium. Formed both in the underside and in the top side of the foil are relief patterns which represent items of holographic information. The holograms are recorded using a special procedure so that the holograms which are stored on both sides of the foil can be read off separately. Optical correlation between the holograms on one side and the holograms on the other side is prevented as far as possible by virtue of the special recording procedure.

Embodiments of the invention are described in greater detail hereinafter with reference to the drawing figures 1 to 5. A short description of the drawings:
- Figure 1: shows an information carrier with optically effective structures for producing moiré effects (which is not an embodiment according to the claims),
- Figure 2: shows an information carrier with an integrated microlens,
- Figure 3: shows an information carrier acting as a retroreflector,

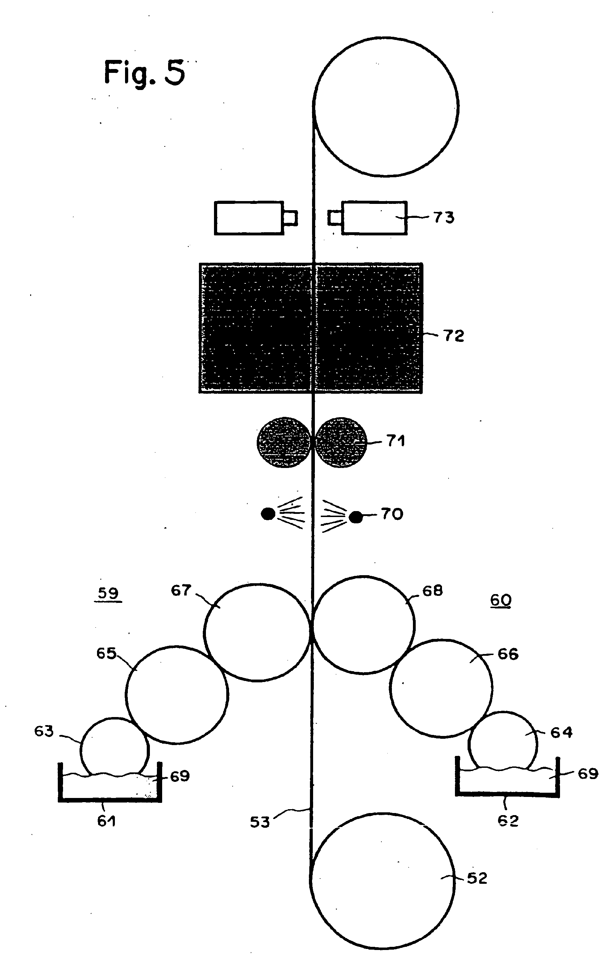

WO94/27254 discloses (in fig. 5) an optical information carrier in the form of a composite laminate with a carrier which is approximately transparent for light in a predetermined spectral range. An array of micro-images is provided at the underside of the carrier. Further the underside of the carrier bears a base layer, the refractive index of which differs from the refractive index of the carrier in at least a portion of the electromagnetic spectrum. The micro-images are surface portions of the array and arranged in mutually juxtaposed relationship and can vary from one surface portion to the next associated surface portion. The topside of the carrier is provided with optically effective, microscopic relief structures which form at least one micro-lens, the thickness of the carrier approximately corresponding to the focal length of the micro-lens and being at least 20 micrometers. A predetermined number of surface portions is associated with each micro-lens to form one of a plurality of juxtaposed information units, each of the surface portions associated with one of the micro-lenses forming a pixel of an image composed of the micro-images so that at a fixed direction of incidence of an incident light beam the pixels form one image, the image conveying different optical impressions at different viewing angles. The micro-images are printed to the underside of the carrier, whereas the micro-lenses on the topside of the carrier can be formed in a respective molding step. The fact that the micro-images have to be printed necessarily means a certain restriction as to the optical effects which can be achieved. As there is no base layer in the area of the micro-images, there can only be reached a limited degree of contrast.

It is an object of the present invention to propose an optical information carrier which has optical security features that cannot be copied using holographic methods and which can be easily produced in large numbers, but which additionally gives the possibility of providing easily and clearly recognizable security features.

This object is achieved with an optical information carrier comprising the features of claim 1, advantageous configurations being subject of the depending claims.

The basic idea underlying the invention is the idea of providing the optical information carrier with two optically effective structures, which are arranged in different plains and which jointly produce a characteristic optical effect. One of the two structures is a microscopically fine relief structure on one side of the carrier foil, whereas the other structure forms micro-lenses. As proper realization of the inventive concept necessitates a high level of register accuracy between the two structures (on both sides of the carrier foil), forgery of a respective information carrier is particularly difficult.

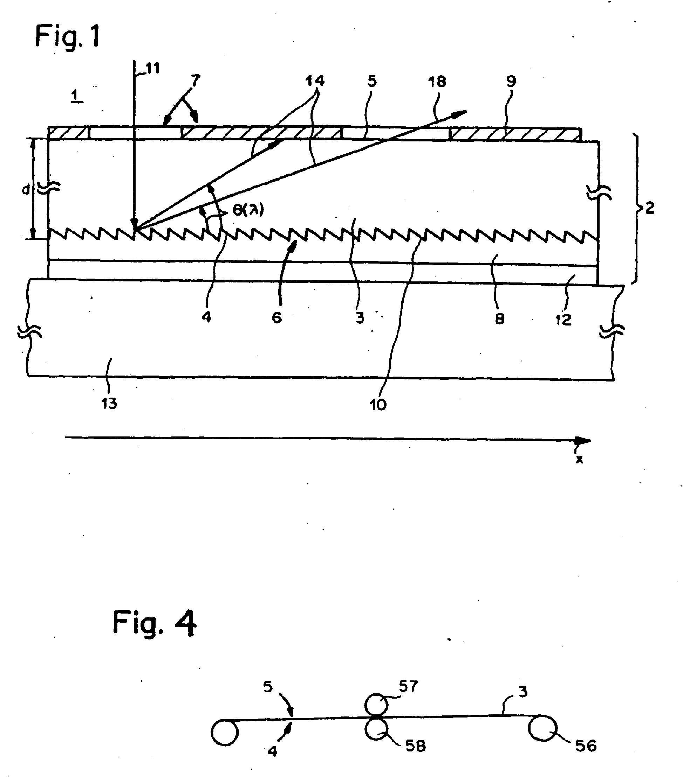

- Figure 4: shows an arrangement for embossing relief structures in register relationship, and
- Figure 5: shows an arrangement for applying structured layers in register relationship.

In the drawings, which are not to scale, Figure 1 shows a view in cross-section of an optical information carrier 1 in the form of a composite laminate 2. The core of the composite laminate 2 is formed by a carrier foil 3 whose thickness d is at least 20 micrometres. The carrier foil 3 may however also be substantially thicker, for example 100 or 200 micrometres. The underside 4 and the top side 5 of the carrier foil 3 are provided with optically effective structures 6, 7, the interplay of which produces very different but characteristic optical effects. The optically effective structures 6, 7 can be formed by shaping microscopic or macroscopic relief structures in the underside and top side 4 and 5 respectively and/or by applying further layers 8, 9 to the underside and the top side 4 and 5 respectively.

The basal structures 6 on the underside 4 of the carrier foil 3 are microscopically fine relief structures 10 which are covered by the base layer 8. The optical refractive index of the base layer 8 differs from the refractive index of the carrier foil 3 at least in a portion of the visible electromagnetic spectrum. The geometrical parameters of the relief structures 10, line spacing and profile height, are typically in the range of some tenths of a micrometre to some micrometres. The profile height however may also be only some tens of nanometres. The relief structures 10 diffract impinging light and produce optical-diffraction effects which can be perceived by the human eye. The iuminosity of the relief structures 10 depends on the difference in the refractive indices of the layers 3, 8 directly embedding the relief structures 10. In the unclaimed example of Fig. 1, the top structures 7 on the top side 5 of the carrier foil 3 are formed by the cover layer 9 only partially covering the carrier foil 3. Accordingly the top structures 7 form on the top side 5 a microscopic pattern comprising surfaces which are formed by the cover layer 9 and which cover the top side 5, and gaps where the top side 5 is exposed. The dimensions of the gaps, in an x-direction, are in the range of ten micrometres and more, typically in the range of 20 to 30 micrometres. In another direction the dimensions of the gaps can be substantially greater, for example a millimetre. The cover layer 9 is not transparent in relation to visible light. It is for example a thin metal layer or a dyestuff layer applied by a printing procedure.

In general the layer 8 is covered by an adhesive layer 12 so that the information carrier 1 can be directly joined to the surface of a base card 13, for example a banknote, an identity card, a document or the like. The layers 12, 8, 3 and 9 form the composite laminate 2 which cannot be separated without being destroyed so that items of information which are present in the form of the structures 6 and 7 are embedded in the composite laminate 2 in such a way as to be safeguarded against forgery.

When illuminated under normal illumination conditions, for example in daylight, the composite laminate 2 of Fig.1 produces so-called moiré effects.

The relief structures 10 are for example a grating with straight or curved grooves. The use of relief structures 10 with an asymmetrical, for example sawtooth-shaped profile configuration provides that the intensity of the light which is diffracted into the positive diffraction orders is greater than the intensity of the light which is diffracted into the negative diffraction orders so that the luminosity of the play of colours when the information carrier is turned through an angle of 180° alters markedly. If the grating parameters of the relief structures 10 on the underside 4 locally depend on the location, the colour pattern produced with a given angle of incidence of the light 11 exhibits locally different colours.

If the base layer 8 and the adhesive layer 12 are in the form of transparent lacquer layers and if the free surface area which is not covered by the cover layer 9 is of a sufficiently large proportion, then the surface of the base card 13 and therewith for example information printed on the base card 13 are visible through the composite laminate 2 which is glued in position. If the base layer 8 in contrast is a metallic layer which almost completely reflects impinging light, then the glued-on composite laminate 2 conceals the surface of the base card 13.

The optical information carrier described with reference to Figure 1 is distinguished by a high level of safeguard against forgery as the structures 6 arranged in the lower plane are not accessible either optically or in any other fashion. The structures 6 are however as equally significant as the structures 7 for producing the desired light guide and filter effects.

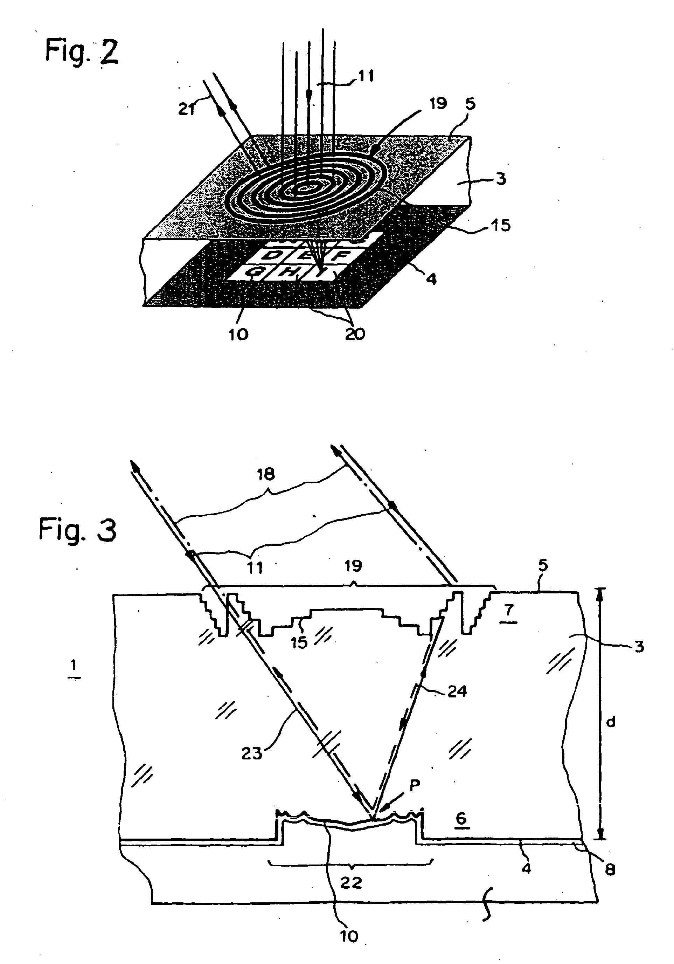

Figure 2 is a perspective view showing the surfaces 4 and 5 of the carrier foil 3. A microlens 19, in the present case a Fresnel lens, in the configuration of a macroscopic relief structure, is formed into the surface 5 as the structure 7 (Figure 1). Nine surface portions 20 are arranged matrix-like in mutually juxtaposed relationship on the underside 4 as the structure 6 (Figure 1), wherein the central one of the nine surface portions 20 is disposed approximately at the focal point of the microlens 19. The information present in the surface portions 20 is symbolically represented in the drawing by letters. The focal length of the microlens 19 and the thickness d of the carrier foil 3 are therefore matched to each other. With a typical diameter of the microlens 19 of 100 µm and a profile height of about 5 µm, focal lengths in the range of 100 µm to 250 µm can readily be achieved. Formed in the surface portions 20 are microscopic relief structures 10 which can fulfill various functions. The microlens 19 and the associated nine surface portions 20 form an information unit. The information carrier 1 preferably contains a plurality of mutually juxtaposed microlenses 19 with associated surface portions 20.

The microlens 19 focusses incident light 11 in dependence on the direction of incidence onto one surface portion 20 or another so that only the relief structures 10 of a single surface portion. 20 are illuminated. In an information carrier 1 which is advantageously in the form of an optical ROM, the diffraction structures 10 diffract light into one or more beam portions 21 of predetermined direction. The relief structures 10 vary from one surface portion 20 to another, according to the stored information. The information stored in the surface portion 20 can be ascertained by machine, by means of a reading device which is designed to analyse the levels of intensity of the beam portions 21. If for example the predetermined number of directions into which light can be diffracted as a beam portion 21 is eight, then each surface portion 20 can store eight bits: in the case of a bit with the binary value "1", light is diffracted in the corresponding direction, while in the case of a bit with the binary value "0", no light is diffracted into the corresponding direction.

The information carrier can also be in the form of a WORM storage means. In that case only a single bit can be stored in each surface portion 20. Immediately after production of the information carrier 1 each surface portion 20 has an identical intact relief structure 10 which diffracts light in at least one predetermined direction as a beam portion 21. The intact relief structure 10 represents a bit "1". The operation of reading the bit is effected with a low-intensity light beam. With a high-intensity light beam which is produced by the reading device which is switched into a high-power mode, the relief structure 10 can be altered insofar as it cannot diffract light, or it can no longer diffract sufficient light, in the predetermined directions, as beam portions 21: the altered relief structure 10 represents a bit "0". Comparatively little energy is required to write a bit "0" as the microlens 19 focusses the light onto the relief structure 10 to be destroyed. In our example, nine surface portions 20 serving as a storage cell for a single bit can be read with each microlens 19, wherein addressing of the correct surface portion 20 is effected by adjusting the direction of incidence of the light 11.

In another configuration the surface portions 20, arranged at the same location, of all information units, respectively form pixels of an image. Therefore nine images can be represented with nine surface portions 20, wherein one or other of the nine images is respectively made visible in dependence on the direction of incident light 11. An image is composed of diffraction structures, wherein the parameters of the diffraction structures may vary from one pixel to another, that is to say from the associated surface portion 20 to the next associated surface portion 20. Such an image can therefore produce kinematic diffraction effects, that is to say, with a fixed direction of incidence of the light, at different viewing angles, the image conveys different optical impressions, as are known for example from European patent specifications EP 105 099 or EP 375 833.

Figure 3 shows the information carrier 1 in which the top side 5 of the carrier foil 3 has once again as the structure 7 a relief structure 15 which acts as a microlens 19. The underside 4 has as the structure 6 the relief structure 10 which is metallised with the layer 8 and which acts as a reflector 22. Light 11 which is incident in parallel relationship is focussed by the microlens 19 onto a given point P on the reflector 22 in dependence on the direction of incidence, as a plurality of beam portions 23, 24. The relief structure 10 of the reflector 22 is now such that the beam portion 23 which locally impinges on the point P is reflected and/or diffracted in the opposite direction to the beam portion 24 impinging on the point P. That provides that the light impinging onto the microlens 19 is reflected in the opposite direction. The combination of the microlens 19 and the reflector 22 thus forms a retroreflector. The retroreflector can be produced in a simple fashion, for example by embossing the relief structures 10, 15 in register relationship into the carrier foil 3 of thermoplastic material.

An example of use is a banknote in which a plurality of retroreflectors are arranged along a track at predetermined spacings, for example like a bar code. The information stored in the bar code can be read out with an optical reading device when the track is moved past the reading head. As the light reflected at the retroreflectors is always reflected back into the direction of incidence, the information can be read without any difficulty, even in the event of the banknote fluttering as a result of a high speed of transportation movement.

Figure 4 shows an arrangement for embossing relief structures in accurate register relationship. The arrangement includes a transport device 56 for the carrier foil 3 which is in the form of a foil strip, and two embossing cylinders 57 and 58. The two embossing cylinders 57, 58 are arranged opposite each other, with the foil strip being guided between the embossing cylinders 57, 58 so that to produce a sufficient embossing pressure they serve as backing cylinders for each other. Suitable precautions, for example a rigidly coupled drive for the two embossing cylinders 57, 58 ensure that the embossing cylinders 57, 58 rotate synchronously, whereby accurate register relationship is achieved for the relief structures 10 and 15 which are embossed into the underside 4 and the top side 5 respectively of the carrier foil 3. The embossing cylinders 57, 58 are heatable. The carrier foil 3 is advantageously in the form of a composite laminate which has a temperature-resistant carrier layer, for example of polyester, arranged between two embossable lacquer layers.

For the production of cheques with a fixed monetary value, two basic processes are known, for providing the embossed top side 5 with the structured cover layer 9 (Figure 12), more specifically selective removal of the cover layer 9 which is applied over the entire surface area or local application of the cover layer 9. Selective removal of the cover layer 9 can be effected by using a printing procedure to apply a structured protective lacquer to the cover layer 9. The surfaces of the cover layer 9, which are not printed upon, are then removed in a solvent bath, for example by etching. Finally the protective lacquer is removed again. Local application of the cover layer 9 can be effected by those surfaces which are not to be covered by the cover layer 9 being printed upon with a lacquer layer. Thereupon the carrier foil 3 which has been treated in that way is coated over its entire surface area with the cover layer 9, for example by vapour deposition. The lacquer layer together with the cover layer 9 disposed thereon are removed by means of a washing process in a selectively attacking solvent.

Figure 5 shows an advantageous arrangement for producing the structures 6, 7 in accurate register relationship, if that is effected by structuring of the layers 8 and 9 (Figure 1). The arrangement includes two printing mechanisms 59, 60 which are known from the letterset process and which each have an ink bath 61 and 62 respectively, an Anilox roller 63 and 64 respectively, a print cylinder 65 and 66 respectively and a rubber cylinder 67 and 68 respectively and which are so arranged that the carrier foil 3 in the form of foil strip is guided between the two rubber cylinders 67 and 68. The print cylinders 65 and 66 which contain the print patterns are uniformly provided by way of the Anilox rollers 63, 64 with a predetermined liquid agent 69 from the ink bath 61 and 62 respectively. The agent 69 is then transferred by the cylinder 65 and 66 respectively in accordance with the corresponding print pattern onto the respective rubber cylinder 67, 68 and from same onto the corresponding surface 4, 5 (Figure 1) of the carrier foil 3. The drive system for the two printing mechanisms 59, 60 is coupled so that the print cylinders 65, 66 and the rubber cylinders 67, 68 rotate synchronously.

The liquid agent 69 can be the above-described protective lacquer or the above-described lacquer layer. The liquid agent 69 may however also be a lye which directly dissolves the layer 8 or 9, which is possible in particular if the layers 8, 9 are thin metallic layers of for example aluminium. In that case the arrangement also has nozzles 70 which spray for example water onto the layers 8 and 9 which are already structured by means of the lye, in order to remove residues of the lye. The carrier foil 3 which is now provided with the structures 6 and 7 is dried by means of a drying device which includes for example squeeze rollers 71 and an oven 72. The arrangement advantageously also has sensors 73 for checking the register accuracy of the structures 6 and 7 so that the printing mechanisms 59, 60 can be accurately adjusted.

## Claims

1. An optical information carrier (1) which is in the form of a composite laminate (2) with a carrier foil (3) which is approximately transparent for light in a predetermined spectral range, wherein microscopically fine relief structures (10), which are subdivided into surface portions (20) which are arranged in mutually juxtaposed relationship and have parameters, which can vary from the one surface portion (20) to the next associated surface portion (20), are formed into the underside (4) of the carrier foil (3), the underside (4) of the carrier foil (3) being coated with a base layer (8) covering the relief structures (10) on the underside (4) of the carrier foil (3), the refractive index of the base layer (8) differing from the refractive index of the carrier foil (3) in at least a portion of the electromagnetic spectrum, the relief structures (10) on the underside (4) at least partially reflecting and diffracting light (11) which has penetrated into the composite laminate (2), wherein the top side (5) of the carrier foil (3) is provided with optically effective, macroscopic relief structures (7) which form at least one micro-lens (19), the thickness (d) of the carrier foil (3) approximately corresponding to the focal length of the micro-lens (19) and being at least 20 micrometers, wherein a predetermined number of surface portions (20) is associated with each micro-lens (19) and form one of a plurality of juxtaposed information units, wherein each of the surface portions (20) associated with one of the micro-lenses (19) forms a pixel of an image composed of the relief structures (10), and wherein at a fixed direction of incidence of an incident light beam (11) the pixels form one image, the image conveying different optical impressions at different viewing angles.

2. The optical information carrier according to claim 1 **characterized in that** the diffraction properties of the relief structures (10) are individually irreversibly alterable by applying thermal energy according to a stored information and form an optical WORM storage means, **in that** the surface portions (20) are individually illuminated by varying the direction of incidence of an incident light beam (11) in order to ascertain the information.

3. The optical information carrier according to claims 1 or 2, **characterized in that** the relief structures (10) vary from one surface portion (20) to another according to a stored information and form an optical ROM, and **in that** the surface portions (20) are individually illuminated by varying the direction of incidence of an incident light beam (11) in order to ascertain the information.

4. The optical information carrier according to any of the preceding claims, **characterized in that** the relief structures (10) on the underside (4) form at least one reflector (22) and that each micro-lens (19) has associated therewith a reflector (22) which together form a retro-reflector which reflects light (11) incident in parallel relationship from a direction of incidence back into the direction of incidence.

5. The optical information carrier according to claim 4, **characterized in that** a plurality of the retro-reflectors composed of the micro-lens (19) and its associated reflector (22), are arranged along a track at predetermined spacings like a bar code.

6. The optical information carrier according to any of the preceding claims **characterized in that** the optically effective structures (7) on the top side and the relief structures (10) on the underside (4) are embossed into the carrier foil (3) in accurate register relationship.

7. The optical information carrier according to any of the preceding claims **characterized in that** the base layer (8) is a metallic layer which almost completely reflects impinging light (11).

8. The optical information carrier according to any of the preceding claims **characterized in that** the micro-lenses (19) is a Fresnel lens.

9. The optical information carrier according to any of the preceding claims **characterized in that** the micro-lenses (19) have a focal length in the range of 100 micrometers to 250 micrometers.

10. The optical information carrier according to any of the preceding claims **characterized in that** the base layer (8) of the composite laminate (2) is covered by an adhesive layer (12) in order to affix the composite laminate (2) to a base card (13) or document (13) or substrate (13)

## Patentansprüche

1. Optischer Informationsträger (1) in der Form eines Schichtverbundes (2) mit einer Trägerfolie (3), die für Licht in einem vorbestimmten Spektralbereich annähernd transparent ist, wobei mikroskopisch feine Reliefstrukturen (10), die in Teilflächen (20) unterteilt sind, welche nebeneinander angeordnet sind und Parameter aufweisen, die von dem einen Teilbereich (20) zum nächsten zugeordneten Teilbereich (20) variieren können, in die Unterseite (4) der Trägerfolie (3) eingeformt sind, wobei die Unterseite (4) der Trägerfolie (3) mit einer die Reliefstrukturen (10) an der Unterseite (4) der Trägerfolie (3) abdeckenden Basisschicht (8) beschichtet ist, deren Brechungsindex sich vom Brechungsindex der Trägerfolie (3) in wenigstens einem Teilbereich des elektromagnetischen Spektrums unterscheidet, so dass die Reliefstrukturen (10) auf der Unterseite (4) das in den Schichtverbund (2) eingedrungene Licht (11) wenigstens teilweise reflektieren und beugen, wobei die Oberseite (5) der Trägerfolie (3) mit optisch wirksamen, makroskopischen Reliefstrukturen (7) versehen ist, die wenigstens eine Mikrolinse (19) bilden, wobei die Dicke (d) der Trägerfolie (3) annähernd der Brennweite der Mikrolinse (19) entspricht und wenigstens 20 Mikrometer beträgt, wobei jeder Mikrolinse (19) eine vorbestimmte Anzahl von Teilflächen (20) zugeordnet ist und so eine aus einer Mehrzahl von nebeneinander angeordneten Informationseinheiten bilden, wobei jeder der einer der Mikrolinsen (19) zugeordneten Teilbereiche (20) ein Pixel eines aus den Reliefstrukturen (10) zusammengesetzten Bildes darstellt, und wobei bei einer fest bestimmten Einfallsrichtung eines einfallenden Lichtstrahls (11) die Pixel ein Bild ergeben, das unter verschiedenen Betrachtungswinkeln unterschiedliche optische Eindrücke vermittelt.

2. Optischer Informationsträger nach Anspruch 1,
**dadurch gekennzeichnet,**
**dass** die Beugungseigenschaften der Reliefstrukturen (10) durch Zufuhr termischer Energie entsprechend einer gespeicherten Information einzeln irreversibel veränderbar sind und einen optischen WORM-Speicher bilden, wobei die Teilflächen (20) einzeln durch Veränderung der Einfallsrichtung eines einfallenden Lichtstrahls (11) beleuchtet werden, um die Information zu ermitteln.

3. Optischer Informationsträger nach Anspruch 1 oder 2,
**dadurch gekennzeichnet,**
**dass** die Reliefstrukturen (10) von einem Teilbereich (20) zu einem anderen entsprechend einer gespeicherten Information variieren und einen optischen ROM-Speicher bilden, und dass die Teilbereiche (20) individuell durch Veränderung der Einfallsrichtung eines einfallenden Lichtstrahles (11) beleuchtet werden, um die Information zu ermitteln.

4. Optischer Informationsträger nach einem der vorhergehenden Ansprüche,
**dadurch gekennzeichnet,**
**dass** die Reliefstrukturen (10) auf der Unterseite (4) wenigstens einen Reflektor (22) bilden, und dass jeder Mikrolinse (19) ein Reflektor (22) zugeordnet ist, wobei diese zusammen einen Retro-Reflektor bilden, der aus einer Einfallsrichtung parallel einfallendes Licht (11) in die Einfallsrichtung zurück reflektiert.

5. Optischer Informationsträger nach Anspruch 4,
**dadurch gekennzeichnet,**
**dass** eine Mehrzahl der aus der Mikrolinse (19) und ihrem zugeordneten Reflektor (22) zusammengesetzten Retro-Reflektoren entlang einer Spur in vorbestimmten Abständen ähnlich einem Strich-Code angeordnet sind.

6. Optischer Informationsträger nach einem der vorhergehenden Ansprüche,
**dadurch gekennzeichnet,**
**dass** die optisch wirksamen Strukturen (7) auf der Oberseite (5) und die Reliefstrukturen (10) auf der Unterseite (4) in die Trägerfolie (3) in genauer Registeranordnung eingeprägt sind.

7. Optischer Informationsträger nach einem der vorhergehenden Ansprüche,
**dadurch gekennzeichnet,**
**dass** die Basisschicht (8) eine Metallschicht ist, die auftreffendes Licht (11) nahezu vollständig reflektiert.

8. Optischer Informationsträger nach einem der vorhergehenden Ansprüche,
**dadurch gekennzeichnet,**
**dass** die Mikrolinsen (19) von einer Fresnel-Linse gebildet sind.

9. Optischer Informationsträger nach einem der vorhergehenden Ansprüche,
**dadurch gekennzeichnet,**
**dass** die Mikrolinsen (19) eine Brennweite im Bereich zwischen 100 und 250 Mikrometern aufweisen.

10. Optischer Informationsträger nach einem der vorhergehenden Ansprüche,
**dadurch gekennzeichnet,**
**dass** die Basisschicht (8) des Schichtverbundes (2) mit einer Klebeschicht (12) bedeckt ist, um den Schichtverbund (2) auf einer Grundkarte (13), einem Dokument (13) oder einem Substrat (13) befestigen zu können.

## Revendications

1. Dispositif porteur d'informations optiques (1) qui est sous la forme d'un stratifié composite (2) avec une feuille mince de support (3) qui est approximativement transparente à la lumière dans une plage spectrale prédéterminée, dans lequel des structures en relief microscopiquement fines (10), qui sont subdivisées en portions de surface (20) qui sont agencées en juxtaposition mutuelle et ont des paramètres, qui peuvent varier d'une portion de surface (20) à la portion de surface associée suivante (20), sont formées dans la face inférieure (4) de la feuille mince de support (3), la face inférieure (4) de la feuille mince de support (3) étant revêtue avec une couche de base (8) couvrant les structures en relief (10) sur la face inférieure (4) de la feuille mince de support (3), l'indice de réfraction de la couche de base (8) différant de l'indice de réfraction de la feuille mince de support (3) dans au moins une portion du spectre électromagnétique, les structures en relief (10) sur la face inférieure (4) reflétant au moins partiellement et diffractant la lumière (11) qui a pénétré dans le stratifié composite (2), dans lequel la face supérieure (5) de la feuille mince de support (3) présente des structures en relief macroscopique optiquement agissantes (7) qui forment au moins une micro-lentille (19), l'épaisseur (d) de la feuille mince de support (3) correspondant approximativement à la longueur focale de la micro-lentille (19) et étant au moins de 20 micromètres, dans lequel un nombre prédéterminé de portions de surface (20) sont associées à chaque micro-lentille (19) et constituent une d'une pluralité d'unités d'information juxtaposées, dans lequel chacune des portions de surface (20) associées à une des micro-lentilles (19) forme un pixel d'une image composée des structures en relief (10), et dans lequel, à une direction fixe d'incidence d'un faisceau lumineux incident (11), les pixels forment une image, l'image véhiculant des impressions optiques différentes à des angles d'observation différents.

2. Dispositif porteur d'informations optiques selon la revendication 1, **caractérisé en ce que** les propriétés de diffraction des structures en relief (10) sont individuellement altérables de façon irréversible par application d'une énergie thermique conformément à une information stockée et constituent un moyen de stockage WROM optique, et **en ce que** les portions de surface (20) sont individuellement éclairées par modification de la direction d'incidence d'un faisceau lumineux incident (11) afin de confirmer l'information.

3. Dispositif porteur d'informations optiques selon la revendication 1 ou 2, **caractérisé en ce que** les structures en relief (10) varient d'une portion de surface (20) à une autre conformément à une information stockée et constituent une ROM optique, et **en ce que** les portions de surface (20) sont individuellement éclairées par variation de la direction d'incidence d'un faisceau lumineux incident (11) afin de confirmer l'information.

4. Dispositif porteur d'informations optiques selon une quelconque des revendications précédentes, **caractérisé en ce que** les structures en relief (10) sur la face inférieure (4) forment au moins un réflecteur (22), et **en ce qu'**à chaque micro-lentille (19) est associé un réflecteur (22) pour former ensemble un rétro-réflecteur qui réfléchit la lumière (11) incidente en relation parallèle d'une direction d'incidence en retour dans la direction d'incidence.

5. Dispositif porteur d'informations optiques selon la revendication 4, **caractérisé en ce qu'**une pluralité des rétro-réflecteurs composés des micro-lentilles (19) et de leur réflecteur associé (22) sont agencés le long d'un chemin à des intervalles prédéterminés comme un code à barres.

6. Dispositif porteur d'informations optiques selon une quelconque des revendications précédentes, **caractérisé en ce que** les structures optiquement agissantes (7) sur la face supérieure (5) et les structures en relief (10) sur la face inférieure (4) sont gravées dans la feuille mince de support (3) en relation d'alignement précis.

7. Dispositif porteur d'informations optiques selon une quelconque des revendications précédentes, **caractérisé en ce que** la couche de base (8) est une couche métallique qui reflète presque complètement la lumière incidente (11).

8. Dispositif porteur d'informations optiques selon une quelconque des revendications précédentes, **caractérisé en ce que** les micro-lentilles (19) constituent une lentille de Fresnel.

9. Dispositif porteur d'informations optiques selon une quelconque des revendications précédentes, **caractérisé en ce que** les micro-lentilles (19) ont une longueur focale dans la plage de 100 micromètres à 250 micromètres.

10. Dispositif porteur d'informations optiques selon une quelconque des revendications précédentes, **caractérisé en ce que** la couche de base (8) du stratifié composite (2) est couverte par une couche adhésive (12) afin de fixer le stratifié composite (2) à une carte (13) ou un document (13) ou un substrat (13) de base.
